# NOUVEAU FASCICULE DE BREVET EUROPEEN

(11) **EP 3 189 211 B2**
(45) Date de publication et mention de la décision concernant l'opposition: **06.04.2022**
(45) Mention de la délivrance du brevet: 18.07.2018
(21) Numéro de dépôt: 15771174.8
(22) Date de dépôt: 28.08.2015
(51) Int. Cl.: F01D 17/02, F16C 3/02, F16D 1/02, F16D 1/10, F01D 5/02, F02C 7/36

(54) **ARBRE DE TURBOMACHINE**
TURBOMASCHINENWELLE
TURBOMACHINE SHAFT

(30) Priorité: 05.09.2014 FR 1458315
(43) Date de publication de la demande: 12.07.2017
(73) Titulaire: Safran Aircraft Engines, 75015 Paris (FR)
(72) Inventeur: ITO-LARDEAU, Youki, Olivier, F-77550 Moissy-cramayel (FR); BAUDUIN, Pierrick, Raphael, Americo, F-77550 Moissy-Cramayel Cedex (FR); BLANCHARD, Stéphane, Pierre, Guillaume, F-77550 Moissy-Cramayel Cedex (FR); PELLATON, Bertrand, Guillaume, Robin, F-77550 Moissy-Cramayel Cedex (FR)
(74) Mandataire: Gevers & Orès
(86) Numéro de dépôt international: PCT/FR2015/052284
(87) Numéro de publication internationale: WO 2016/034796

(56) Documents cités:
- EP-A1- 1 813 769
- WO-A1-01/07762
- FR-A1- 2 168 938
- FR-A1- 2 993 311
- GB-A- 2 136 531

## Description

### Domaine de l'invention :

La présente invention se rapporte au domaine des turbomachines et plus particulièrement à celui des arbres transmettant la puissance entre les différents rotors de la turbomachine.

### Etat de la technique :

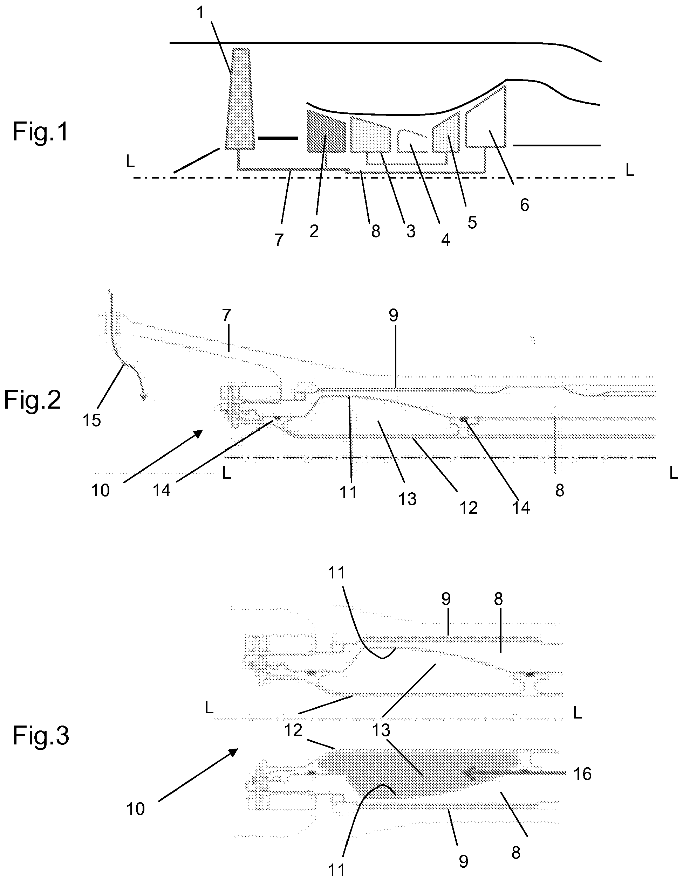

Une turbomachine comprend généralement, lorsqu'elle est à double flux comme illustré schématiquement sur la figure 1, d'amont en aval dans le sens de l'écoulement des gaz, une soufflante 1, un ou plusieurs étages de compresseur, basse pression 2 puis haute pression 3, une chambre de combustion 4, un ou plusieurs étages de turbine, haute pression 5 puis basse pression 6, et une tuyère d'échappement des gaz. Des rotors, tournant autour de l'axe principal LL de la turbomachine et pouvant être couplés entre eux par différents systèmes de transmission et d'engrenages, correspondent à ces différents éléments.

En particulier, l'entraînement du compresseur basse pression 2 par la turbine basse pression 6 se fait par le couplage entre les arbres 7 et 8, qui leur sont respectivement liés. Une liaison est donc indispensable entre ces deux arbres 7, 8 pour faire passer le couple de la turbine basse pression 6 vers le compresseur basse pression 2.

En référence à la figure 2, de manière connue, des cannelures 9, réparties en périphérie près d'une extrémité 10 de l'arbre 8 de la turbine basse pression 6 venant s'insérer dans l'arbre 7 du compresseur basse pression 2, permettent de transmettre ce couple.

Par ailleurs, l'arbre 8 de la turbine basse pression a généralement une forme tubulaire creuse près de cette extrémité 10. De manière connue également, une baignoire 11 est réalisée dans la périphérie interne de l'arbre 8, au droit des cannelures 9, et sa forme est optimisée pour minimiser la masse de l'arbre 8 tout en assurant sa résistance mécanique au passage du couple.

Dans cette technologie, l'arbre 8 de la turbine basse pression comprend aussi une pièce tubulaire radialement interne 12 au niveau de l'extrémité 10. Cette pièce tubulaire interne 12 a notamment pour fonction de fermer la baignoire 11 et elle forme avec l'arbre 8, une cavité annulaire 13 au niveau de la baignoire 11.

Cette cavité annulaire 13 est généralement rendue étanche par des joints annulaires 14 positionnés à ses extrémités, entre l'arbre 8 et la pièce tubulaire 12. En effet, l'extrémité 10 de l'arbre 8 baigne dans un flux d'air 15 provenant d'autres parties de la turbomachine. Cet air est déshuilé mais il comprend quand même une faible quantité d'huile. Cette technologie empêche que de l'huile ne s'accumule par effet centrifuge dans la baignoire 11 et n'entraîne une fatigue de la structure de l'arbre 8 par des effets de balourd.

Bien que ce ne soit normalement pas le cas, la conception de la turbomachine doit prendre en compte un risque de rétention d'huile dans la baignoire 11 si l'étanchéité de l'un des joints 14 venait à être défaillante. Dans cette éventualité, la poche d'huile ainsi créée est plaquée sur les parois extérieures de la baignoire 11 sous l'effet de la force centrifuge et glisse dans l'arbre 8 en rotation. Elle ne tourne donc pas à la même vitesse que l'arbre. La figure 3 illustre par exemple un effet de balourd maximal, à 180°, où une poche d'huile 16 se regroupe d'un seul côté de la cavité annulaire 13, sur la figure le côté bas, laissant vide la partie diamétralement opposée de la cavité annulaire 13.

L'expérience montre que les fréquences de vibration engendrées par une telle poche d'huile 16 sur les structures apparaissent à environ 90% du régime de rotation de l'arbre 8. Ces vibrations sont asynchrones et ne sont pas détectables par des capteurs. De ce fait, l'arbre 8 de la turbine basse pression 6 est le siège de contraintes alternées qui le sollicitent en fatigue selon des cycles hautes fréquences.

Dans le document FR-A1-2 993 311, il est décrit un dispositif permettant d'évacuer de l'huile présente dans la cavité formée au niveau du couplage entre deux arbres, en plaçant des orifices dans une région de la paroi interne la plus éloignée de l'axe. Cependant, de par sa forme, la baignoire 11 peut piéger de l'huile qui ne peut être entraînée par centrifugation vers les orifices d'évacuation. De plus, il n'est pas envisageable de placer des orifices d'évacuation dans la baignoire 11 puisqu'elle se trouve au droit des cannelures 9 de couplage.

Il existe donc un besoin de détecter la présence d'huile en cas de défaillance de l'étanchéité de la cavité correspondant à la baignoire pratiquée sur un tel arbre de transmission de puissance, entre deux arbres. La présente invention a pour objectif de répondre à ce besoin.

### Exposé de l'invention :

A cet effet, l'invention concerne un arbre tubulaire de turbomachine, comportant à sa périphérie interne une baignoire, caractérisé en ce que ladite baignoire comporte au moins une alvéole ménagée dans une surface centrée sur l'axe de rotation de l'arbre et en ce que l'arbre tubulaire comporte des moyens de couplage disposés à sa périphérie externe et configurés pour transmettre un couple à un autre arbre, la baignoire étant située sensiblement au droit desdits moyens de couplage.

Par baignoire, on entend ici un creux formé sur l'ensemble de la circonférence de l'arbre de rotation dans une portion sensiblement cylindrique de la périphérie interne de l'arbre tubulaire.

De cette manière, lorsque ledit arbre est mis en rotation dans une turbomachine, si de l'huile s'introduit au niveau de la baignoire, elle commence par s'accumuler par effet centrifuge dans la ou les alvéoles, qui forment la partie radialement la plus éloignée de la paroi de la baignoire. L'huile piégée dans ces alvéoles tourne alors à la même vitesse que l'arbre et le balourd qu'elle crée devient détectable.

Par ailleurs, généralement, ce type de baignoire se trouve généralement près d'un embout de l'arbre, ce qui amplifie l'importance du balourd et facilite sa détection. De plus, dans ce cas, la réalisation d'un arbre de turbomachine suivant l'invention revient à modifier sa paroi interne près de l'embout. Cela peut être fait avant l'assemblage avec une pièce tubulaire interne, venant boucher la baignoire, sans modifier cette pièce ni les interfaces avec cette pièce. Il s'agit donc d'une modification relativement simple et facilement réalisable apportée à la conception d'un arbre de turbomachine.

De préférence, ladite baignoire comporte une partie dans laquelle ladite au moins une alvéole est ménagée sur une surface générée par la rotation autour de l'axe de rotation d'une courbe définie dans un plan méridien.

On se trouve donc bien dans une baignoire où l'huile se répartirait sans prédétermination à cause de la symétrie de révolution de la géométrie sans la présence des alvéoles.

Avantageusement, l'arbre de turbomachine comprend au moins deux alvéoles réparties sur une circonférence autour de l'axe de rotation.

De préférence, les alvéoles sont régulièrement réparties autour dudit axe de rotation.

Encore plus préférentiellement, les alvéoles sont symétriques par rapport audit axe de rotation ou par rapport à un plan passant par ledit axe de rotation.

Le nombre d'alvéoles permet de modifier la fréquence et l'intensité du balourd créé par la présence d'une quantité d'huile dans la cavité. D'une manière générale, la géométrie et le nombre d'alvéoles définissent le volume d'huile qui sera retenu. Ces paramètres sont ajustés en fonction de la valeur du balourd que l'on souhaite détecter.

Avantageusement, la ou les alvéoles sont obtenues par fraisage ou par électroérosion dans une paroi intérieure de l'arbre.

Selon un autre mode de réalisation, la ou les alvéoles sont formées par des pièces formant des cloisons et s'étendant sensiblement radialement à partir d'une paroi intérieure de l'arbre. Les pièces formant cloisons peuvent être fixées à une paroi intérieure de l'arbre par brasage ou par soudage.

Selon l'invention, l'arbre tubulaire de turbomachine comporte des moyens de couplage disposés à sa périphérie externe et configurés pour transmettre un couple à un autre arbre.

Selon l'invention , la baignoire est située sensiblement au droit desdits moyens de couplage.

Lorsque ledit arbre est utilisé dans une turbomachine pour transmettre un couple, par exemple celui de la turbine de puissance, à un autre arbre, l'invention permet de détecter une éventuelle accumulation dans la baignoire ménagée pour des raisons mécanique, d'huile passant par l'ouverture de l'arbre au niveau du couplage entre les arbres.

Lesdits moyens de couplage peuvent être des cannelures.

L'invention concerne de plus une turbomachine comprenant un arbre, tels qu'ils viennent d'être décrits. En particulier, elle peut correspondre au cas où l'arbre est entraîné par la turbine basse pression, et entraîne l'arbre du compresseur basse pression.

L'invention concerne aussi un procédé de détection de la présence d'huile à l'intérieur d'un arbre de turbomachine, au niveau d'une baignoire dans sa périphérie interne, caractérisé en ce que le procédé utilise un arbre tel que décrit précédemment, et en ce que le procédé comprend une étape de mesure d'une valeur d'un balourd de l'arbre synchrone avec un régime de rotation de l'arbre, et une étape d'émission d'une alerte lorsque l'écart entre ladite valeur de balourd et une valeur de balourd de l'arbre seul est supérieur à un seuil déterminé, correspondant à la présence probable d'huile piégée dans une alvéole au moins et produisant un balourd synchrone avec le régime de l'arbre.

### Brève description des figures :

La présente invention sera mieux comprise et d'autres détails, caractéristiques et avantages de la présente invention apparaîtront plus clairement à la lecture de la description d'un exemple non limitatif qui suit, en référence aux dessins annexés sur lesquels :
- la figure 1 présente schématiquement l'architecture d'une turbomachine selon l'état de la technique ;
- la figure 2 présente une demi-coupe suivant un plan méridien d'une extrémité d'un arbre selon l'état de la technique ;
- la figure 3 présente un coupe suivant un plan méridien d'une extrémité d'un arbre selon l'état de la technique avec une poche d'huile ;
- la figure 4 présente une demi-coupe suivant un plan méridien d'une extrémité d'un arbre selon l'invention ;
- la figure 5 présente un arbre selon l'invention coupée en deux suivant un plan méridien, la pièce tubulaire interne ayant été retirée ;
- les figures 6a et 6b présentent une coupe selon un plan BB défini à la figure 5 de différentes variantes d'un arbre selon l'invention pour un premier mode de réalisation obtenu avec un premier procédé d'usinage ;
- les figures 7a à 7d présentent une coupe selon un plan BB défini à la figure 5 de différentes variantes d'un arbre selon l'invention pour un premier mode de réalisation obtenu avec un second procédé d'usinage ; et
- les figures 8a et 8b présentent une coupe selon un plan BB défini à la figure 5 de différentes variantes d'un arbre selon l'invention pour un troisième mode de réalisation.

### Description d'un mode de réalisation :

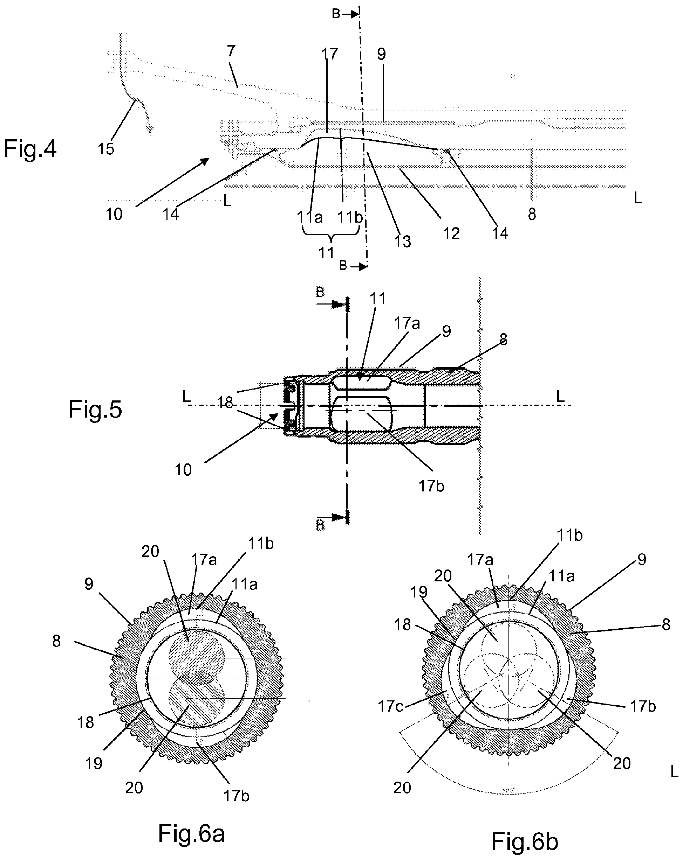

En référence à la figure 4, un arbre de turbomachine réalisé selon l'invention diffère de celui représenté à la figure 2 en ce que la forme de la surface interne de l'arbre 8 tubulaire a été modifiée au niveau de la baignoire 11.

La surface de la baignoire 11 comporte une partie plus proche de l'axe de révolution LL, générée par la rotation d'une courbe 11a dans un plan méridien et qui donne une première forme de baignoire au niveau des cannelures 9. Par contre, elle comporte au moins une alvéole 17 obtenue dans un secteur angulaire donné par le raccord entre cette première surface et une ligne 11b suivant, dans un plan méridien, les points de rayon maximum dans la surface de l'alvéole 17.

On peut voir sur la figure 5, deux alvéoles 17a, 17b ainsi formées dans la baignoire 11 sur la surface interne de l'arbre 8.

La surface d'une alvéole peut suivre ou pas la ligne 11b de rayons maxima sur un certain débattement angulaire autour de l'axe LL et peut se raccorder de diverses manière à la surface suivant la ligne génératrice 11a. Le nombre d'alvéoles peut également varier. Cela dépend d'une certaine manière de la technique utilisée pour créer ces alvéoles.

Selon un premier mode de réalisation, les alvéoles 17a, 17b peuvent être créées par des évidements dans la paroi interne de l'arbre 8.

En référence aux figures 6a et 6b, les évidements peuvent être obtenus par fraisage dans la paroi de l'arbre 8.

La figure 6a représente une coupe transversale de l'arbre 8, selon un plan BB représenté sur les figures 4 et 5, dans laquelle deux alvéoles 17a, 17b ont été fraisées. On y voit les cannelures 9 sur la section radialement externe de l'arbre 8. Le plus petit cercle représente la section interne 18 de l'arbre 8 entre l'extrémité 10 et la baignoire 11. C'est par cette section que l'on peut faire passer les outils pour évider la paroi interne de l'arbre 8 au niveau de la baignoire 11.

Un deuxième cercle 19 délimite la section de la paroi interne dans la baignoire 11 correspondant à la courbe 11a, en dehors des alvéoles 17a, 17b. Deux alvéoles 17a et 17b sont représentées sur la figure 6a. Elles sont ici symétriques par rapport à un plan horizontal, sur la figure. Le rayon de leur section décroît régulièrement entre la partie centrale, de rayon maximum et correspondant à la position de la ligne 11b de la figure 4 dans le plan de coupe, et les extrémités rejoignant la section minimale 19 dans la baignoire 11. Elles sont symétriques par rapport à un plan méridien vertical. La baignoire 11 avec ses alvéoles 17a, 17b a donc ici une symétrie d'ordre 2.

Différentes positions de la section 20 de l'outil de fraisage, lors de son introduction par l'extrémité 10 de l'arbre 8 dans la baignoire 11, sont représentées sur la figure 6a. On voit qu'il est introduit face au centre de chaque alvéole 17a, 17b avant d'être déplacé de manière à enlever la matière et créer l'évidement correspondant. Cette procédure permet de réaliser les mêmes formes pour les différentes alvéoles en reproduisant à chaque fois le même enchaînement de commandes pour l'outil.

La figure 6b montre une variante de réalisation dans laquelle trois alvéoles 17a, 17b, 17c sont créées par fraisage dans la paroi de la baignoire 11 de section initiale circulaire 19 correspondant à la courbe 11a. De même, l'outil de fraisage 20 est présenté devant le centre de chaque alvéole 17a, 17b, 17c au début du fraisage de chacune. Ici, les trois alvéoles sont identiques et régulièrement espacées, la baignoire a donc une symétrie d'ordre 3.

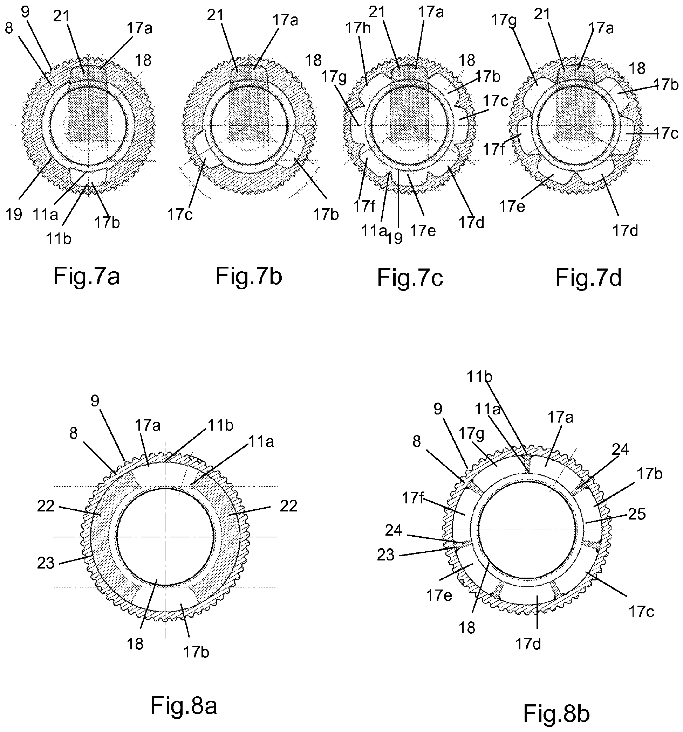

Selon un autre procédé d'usinage, en référence aux figures 7a à 7d, les évidements correspondant aux alvéoles sont créés par électroérosion dans la paroi interne 19, correspondant à la courbe 11a sur la figure 4, de l'arbre 8 au niveau de la baignoire 11.

La figure 7a montre une coupe transversale de l'arbre 8 dans laquelle deux alvéoles 17a, 17b symétriques sont obtenues par ce procédé. Ici, on voit l'électrode 21 de l'outil dans sa position finale lorsque l'alvéole 17a du haut a été créée. Comme précédemment, l'électrode 21 a été introduite à l'intérieur de l'arbre 8 au niveau de la baignoire 11, par l'extrémité 10 de section transversale minimale 18. Ici, l'électrode 21 a été introduite par le centre puis a été translatée vers le fond de l'alvéole 17a en suivant le parcours représenté par la surface hachurée durant le procédé d'électroérosion. On peut voir, sur l'alvéole opposée 17b que celle-ci a, en coupe, la forme de la trace de l'électrode 21.

Les figures 7b, 7c et 7d illustrent des variantes où l'électrode 21 a été utilisée dans trois, huit ou sept directions pour créer autant d'alvéoles semblables et régulièrement espacées.

La figure 7c, avec huit alvéoles, illustre un cas où, compte tenu de la largeur de l'électrode 21 et du nombre d'alvéoles 17a-17h, les bords des alvéoles se rejoignent. Le rayon de la section minimale 11a de la baignoire 11 avec les alvéoles 17a-17h est donc supérieur à celui de la section 19 de la baignoire 11 initiale.

En fait, dans une autre variante, non décrite précisément ici mais accessible à l'homme du métier, les deux procédés d'usinage présentés peuvent être utilisés pour créer directement la baignoire 11 avec ses alvéoles 17a-17h selon une forme désirée, à l'intérieur d'un arbre 8 dont la paroi interne serait cylindrique, sans forme de baignoire préalablement réalisée.

Selon un deuxième mode de réalisation, les alvéoles peuvent être obtenues en comblant l'espace à l'intérieur d'une baignoire 11 initialement réalisée dans l'arbre 8.

En référence à la figure 8a, deux pièces identiques 22, ayant une section transversale correspondant à secteur annulaire inférieur à 180°, sont installées symétriquement à droite et à gauche de la paroi interne 23 de la baignoire 11 initiale, correspondant ici à la position de la ligne 11b au niveau de la section BB de coupe transversale. Deux alvéoles 17a, 17b correspondant elles-mêmes a des secteurs angulaires ayant même épaisseur que ceux des pièces 22 sont ainsi formées en haut et en bas. L'ensemble est symétrique d'ordre deux.

Dans une variante de réalisation, ce sont plutôt une série de cloisons 24, relativement fines, qui sont installées radialement sur la paroi interne 23 de la baignoire 11 initiale. Ces cloisons 24 étant régulièrement espacées, elles forment une série d'alvéoles symétriques 17a-17g, d'ordre sept sur la figure 8b. L'extrémité radialement intérieure de ces cloisons 24 suit l'évolution de la courbe 11a de rayon minimal de la figure 4. Ces cloisons 24 peuvent être reliées entre elles à une ou plusieurs viroles 25 intérieures pour assurer leur tenue mécanique.

Ces pièces 22 ou cloisons 24 peuvent être fixées par brasage ou soudage sur la surface interne 23 de l'arbre 8, dans la baignoire 11.

Comme on peut le voir à partir des exemples qui viennent d'être présentés, il est possible de réaliser l'arbre 8 sans avoir à modifier d'autres pièces, notamment la pièce tubulaire interne 12 conçue selon l'état de l'art. L'assemblage complet de l'arbre peut se faire, ensuite, selon l'état de l'art, en montant la pièce tubulaire interne 12 dans l'arbre 8, équipé des alvéoles 17 dans la baignoire 11.

L'invention a été présentée en utilisant de préférence au moins deux alvéoles pour préserver la symétrie de l'arbre lorsqu'il n'y a pas d'huile mais on peut aussi envisager de n'y faire qu'une seule alvéole, qui piègera alors obligatoirement l'huile selon un mode non symétrique.

Par ailleurs, la réalisation des alvéoles a été présentée ici dans une baignoire ménagée au niveau des moyens de couplage de l'arbre parce que cette baignoire est proche du passage de l'huile à l'embout de couplage de l'arbre et correspond donc à un risque identifié. Il est cependant évident que l'invention peut s'appliquer à tout arbre présentant une baignoire en un endroit quelconque de sa périphérie interne et où l'on craint que de l'huile ne s'accumule en créant des efforts parasites lors de sa rotation. En particulier, les procédés de création des alvéoles par fraisage ou électroérosion décrits plus haut peuvent être utilisés, en amenant les outils au niveau de la baignoire par l'une des extrémités ouvertes de l'arbre tubulaire, comme cela a été décrit plus haut.

Enfin, lorsqu'un arbre tel qu'il vient d'être décrit a été monté dans une turbomachine, il est possible d'équiper la turbomachine avec des capteurs de vibration selon des technologies connues. Si un joint d'étanchéité 14 de la cavité 13 venait à se détériorer et que de l'huile s'accumule dans la cavité 13, grâce à l'invention, l'huile est piégée dans au moins l'une des alvéoles 17 et le balourd devient synchrone avec le régime de l'arbre. Un système de surveillance de la turbomachine équipé d'un calculateur avec un logiciel adapté peut alors mesurer la valeur du balourd de l'arbre et la comparer à une valeur de balourd de référence, mesurée préalablement pour l'arbre seul, sans huile. Si cette valeur s'écarte de la valeur de référence au-delà d'un seuil prédéterminé, le système peut alors émettre une alerte indiquant l'apparition de vibrations dues, probablement, à la présence d'huile dans les alvéoles 17 de la baignoire 11 et donc d'un balourd d'huile.

## Revendications

1. Arbre tubulaire (8) de turbomachine, comportant à sa périphérie interne une baignoire (11), **caractérisé en ce que** ladite baignoire (11) comporte au moins une alvéole (17) ménagée sur une surface (19) centrée sur l'axe de rotation (LL) de l'arbre (8), et **en ce que** l'arbre tubulaire (8) comporte des moyens de couplage (9) disposés à sa périphérie externe et configurés pour transmettre un couple à un autre arbre (7), la baignoire (11) étant située sensiblement au droit desdits moyens de couplage (9).

2. Arbre de turbomachine selon la revendication précédente, dans lequel ladite baignoire (11) comporte une partie dans laquelle ladite au moins une alvéole (17) est ménagée sur une surface (19) générée par la rotation autour de l'axe de rotation (LL) d'une courbe (11a) définie dans un plan méridien.

3. Arbre de turbomachine l'une des revendications précédentes, comprenant au moins deux alvéoles réparties sur une circonférence autour de l'axe de rotation (LL) de l'arbre (8).

4. Arbre de turbomachine selon la revendication précédente, dans lequel les alvéoles (17a-17b) sont régulièrement réparties autour dudit axe de rotation (LL).

5. Arbre de turbomachine selon la revendication précédente, dans lequel les alvéoles (17a, 17b) sont symétriques par rapport audit axe de rotation (LL) ou par rapport à un plan passant par ledit axe de rotation.

6. Arbre de turbomachine selon l'une des revendications précédentes, dans lequel la ou les alvéoles (17a, 17b) sont obtenues par fraisage ou par électroérosion dans une paroi intérieure (19) de l'arbre (8).

7. Arbre de turbomachine selon l'une des revendications 1 à 5, dans laquelle la ou les alvéoles (17a, 17b) sont formées par des pièces (22, 24) formant des cloisons et s'étendant sensiblement radialement à partir d'une paroi intérieure (23) de l'arbre.

8. Arbre de turbomachine selon la revendication précédente, dans lequel les pièces (22, 24) formant cloisons sont fixées par brasage ou par soudage.

9. Arbre de turbomachine selon l'une des revendications précédentes, dans lequel les moyens de couplage (9) sont des cannelures.

10. Turbomachine comprenant un arbre (8) selon l'une des revendications 1 à 9.

11. Procédé de détection de la présence d'huile à l'intérieur d'un arbre tubulaire de turbomachine selon l'une des revendications 1 à 9, au niveau d'une baignoire (11) dans sa périphérie interne, le procédé comprenant une étape de mesure d'une valeur d'un balourd de l'arbre (8) synchrone avec un régime de rotation de l'arbre, et une étape d'émission d'une alerte lorsque l'écart entre ladite valeur de balourd et une valeur de balourd de l'arbre seul est supérieur à un seuil déterminé, correspondant à la présence probable d'huile piégée dans une alvéole au moins et produisant un balourd synchrone avec le régime de l'arbre.

## Patentansprüche

1. Röhrenförmige Turbomaschinenwelle (8), die an ihrem Innenumfang eine Wanne (11) umfasst, **dadurch gekennzeichnet, dass** die Wanne (11) mindestens eine Zelle (17) umfasst, die auf einer Oberfläche (19) angeordnet ist, die auf der Rotationsachse (LL) der Welle (8) zentriert ist, und dass die röhrenförmige Welle (8) Kopplungsmittel (9) umfasst, die an ihrem Außenumfang angeordnet und dazu konfiguriert sind, ein Drehmoment zu einer anderen Welle (7) zu übertragen, wobei die Wanne (11) im Wesentlichen im rechten Winkel zu den Kopplungsmitteln (9) liegt.

2. Turbomaschinenwelle nach dem vorstehenden Anspruch, wobei die Wanne (11) einen Teil umfasst, in dem die mindestens eine Zelle (17) auf einer Oberfläche (19) eingerichtet ist, die von der Drehung um die Rotationsachse (LL) einer Kurve (11a), die in einer Meridianebene definiert ist, erzeugt wird.

3. Turbomaschinenwelle nach einem der vorstehenden Ansprüche, die mindestens zwei Zellen umfasst, die auf einem Umfang um die Rotationsachse (LL) der Welle (8) verteilt sind.

4. Turbomaschinenwelle nach dem vorstehenden Anspruch, wobei die Zellen (17a-17b) regelmäßig um die Rotationsachse (LL) verteilt sind.

5. Turbomaschinenwelle nach dem vorstehenden Anspruch, wobei die Zellen (17a, 17b) in Bezug auf die Rotationsachse (LL) oder in Bezug auf eine Ebene, die durch die Rotationsachse verläuft, symmetrisch sind.

6. Turbomaschinenwelle nach einem der vorstehenden Ansprüche, wobei die Zelle oder die Zellen (17a, 17b) durch Fräsen oder durch Elektroerosion in einer Innenwand (19) der Welle (8) erhalten werden.

7. Turbomaschinenwelle nach einem der Ansprüche 1 bis 5, wobei die Zelle oder die Zellen (17a, 17b) aus Teilen (22, 24) gebildet sind, die Wände bilden und sich im Wesentlichen radial ausgehend von einer Innenwand (23) der Welle erstrecken.

8. Turbomaschinenwelle nach dem vorstehenden Anspruch, wobei die Teile (22, 24), die Wände bilden, durch Löten oder durch Schweißen befestigt sind.

9. Turbomaschinenwelle nach einem der vorstehenden Ansprüche, wobei die Kupplungsmittel (9) Rillen sind.

10. Turbomaschine, die eine Welle (8) nach einem der Ansprüche 1 bis 9 umfasst.

11. Verfahren zum Erfassen des Vorhandenseins von Öl in dem Inneren einer röhrenförmigen Turbomaschinenwelle nach einem der Ansprüche 1 bis 9, im Bereich der Wanne (11) in ihrem Innenumfang, wobei das Verfahren einen Schritt des Messens eines Werts einer Unwucht der Welle (8) synchron mit einer Drehzahl der Welle umfasst, und einen Schritt des Ausgebens einer Warnung, wenn der Unterschied zwischen dem Unwuchtwert und einem Unwuchtwert der Welle allein größer ist als ein bestimmter Schwellenwert, der dem wahrscheinlichen Vorhandensein von Öl, das in mindestens einer Zelle gefangen ist, entspricht und eine Unwucht synchron mit der Wellendrehzahl erzeugt.

## Claims

1. Tubular turbine engine shaft (8), having at its inner periphery a trough (11), **characterised in that** said trough (11) has at least one recess (17) made in a surface (19) centred on the axis of rotation (LL) of the shaft (8) and **in that** , having connection means (9) disposed at its outer periphery and configured so as to transmit a torque to another shaft (7), the trough (11) being situated substantially in line with said connection means.

2. Turbine engine shaft according to the preceding claim, wherein said trough (11) has a part in which said at least one recess (17) is made on a surface (19) generated by the rotation about the axis of rotation (LL) of a curve (11a) defined in a meridian plane.

3. Turbine engine shaft according to any of the preceding claims, comprising at least two recesses distributed on a circumference about the axis of rotation (LL) of the shaft (8).

4. Turbine engine shaft according to the preceding claim, wherein the recesses (17a, 17b) are distributed regularly about said axis of rotation (LL).

5. Turbine engine shaft according to the preceding claim, wherein the recesses (17a, 17b) are symmetrical in relation to said axis of rotation (LL) or in relation to a plane passing through said axis of rotation.

6. Turbine engine shaft according to any of the preceding claims, wherein the recess or recesses (17a, 17b) are obtained by milling or by electrical discharge machining in an internal wall (19) of the shaft (8).

7. Turbine engine shaft according to any of claims 1 to 5, wherein the recess or recesses (17a, 17b) are formed by parts (22, 24) forming partitions and extending substantially radially from an internal wall (23) of the shaft.

8. Turbine engine shaft according to the preceding claim, wherein the parts (22, 24) forming partitions are fixed by brazing or welding.

9. Turbine engine shaft according to any of the preceding claims, wherein the connection means (9) are splines.

10. Turbine engine comprising a shaft (8) according to any of claims 1 to 9.

11. Method for detecting the presence of oil inside a tubular turbine engine shaft according to any of claims 1 to 9, at a trough (11) in its inner periphery, the method comprising a step of measuring a value of an unbalance of the shaft (8) synchronous with a rotation speed of the shaft, and a step of issuing an alert when the difference between said unbalance value and an unbalance value of the shaft alone is above a predetermined threshold, corresponding to the likely presence of oil trapped in one recess at least and producing an unbalance synchronous with the speed of the shaft.
